# EUROPEAN PATENT APPLICATION

(11) **EP 4 847 388 A1**
(43) Date of publication of application: **02.12.2026**
(21) Application number: 26182103.7
(22) Date of filing: 29.05.2026
(51) Int. Cl.: B64D 29/08, B64C 11/00, B64C 11/30, B64D 27/00

(54) **NACELLE STRUCTURE WITH MOVEABLE OPENING COVERS FOR OPEN ROTOR PROPULSION SYSTEM**

(30) Priority: 29.05.2025 US 202519222460
(71) Applicant: RTX Corporation, Farmington, CT 06032 (US)
(72) Inventor: YAZICI, Murat, Glastonbury, 06033 (US); MORTON, Jeffrey T., Manchester, 06040 (US)
(74) Representative: Dehns

(57) **Abstract**

An assembly includes a nacelle structure (76) and a plurality of open guide vanes (100). The nacelle structure (76) includes an exterior surface (80), a first opening (110) and a first moveable cover (108). The first moveable cover (108) is moveable between a first closed position and a first open position. The first moveable cover (108) at least partially closes the first opening and forms a first section of the exterior surface (80) in the first closed position. The first moveable cover (108) at least partially opens the first opening in the first open position. Each of the open guide vanes (100) is configured to project radially outward from the exterior surface (80), into the environment (22) external to the aircraft propulsion system (20), to a respective vane tip (102). A portion of the first moveable cover (108) is located circumferentially between and extends axially along a first of the open guide vanes (100) and a second of the open guide vanes (100) in the first closed position.

## Description

### BACKGROUND OF THE INVENTION

### 1. Technical Field

This invention relates generally to an aircraft and, more particularly, to a nacelle structure for an aircraft propulsion system.

### 2. Background Information

Various types and configurations of aircraft propulsion systems are known in the art including those with one or more open propulsor rotors. While these known aircraft propulsion systems have various benefits, there is still room in the art for improvement.

### SUMMARY OF THE INVENTION

According to an aspect of the present invention, an assembly is provided for an aircraft propulsion system. This assembly includes a nacelle structure and a plurality of open guide vanes. The nacelle structure extends axially along and circumferentially about an axis. The nacelle structure includes an exterior surface, a first opening and a first moveable cover. The exterior surface is configured to border an environment external to the aircraft propulsion system. The first moveable cover is configured to move between a first closed position and a first open position. The first moveable cover at least partially closes the first opening and forms a first section of the exterior surface in the first closed position. The first moveable cover at least partially opens the first opening in the first open position. The open guide vanes are arranged circumferentially about the nacelle structure in an array. Each of the open guide vanes is configured to project radially outward from the exterior surface, into the environment external to the aircraft propulsion system, to a respective vane tip. The open guide vanes include a first open guide vane and a second open guide vane that circumferentially neighbors the first open guide vane. A portion of the first moveable cover is located circumferentially between and extends axially along the first open guide vane and the second open guide vane in the first closed position.

According to another aspect of the present invention, another assembly is provided for an aircraft propulsion system. This assembly includes a nacelle structure and a plurality of open guide vanes. The nacelle structure extends axially along and circumferentially about an axis. The nacelle structure includes an exterior surface, a first opening and a first nacelle door. The exterior surface is configured to border an environment external to the aircraft propulsion system. The first nacelle door is operatively coupled to a stationary structure and configured to move between a first closed position and a first open position. The first nacelle door at least partially closes the first opening and forms a first section of the exterior surface in the first closed position. The first nacelle door at least partially opens the first opening in the first open position. The open guide vanes are arranged circumferentially about the nacelle structure in an open guide vane array. Each of the open guide vanes is configured to project radially outward from the exterior surface, into the environment external to the aircraft propulsion system, to a respective vane tip. The first opening, when uncovered, is configured to provide access to an area radially inboard of the nacelle structure and axially aligned with the open guide vane array.

According to still another aspect of the present invention, another assembly is provided for an aircraft propulsion system. This assembly includes a nacelle structure, a plurality of open guide vanes and a vane actuation system. The nacelle structure extends axially along and circumferentially about an axis. The nacelle structure includes an exterior surface, a first opening and a first moveable cover. The first moveable cover is configured to move between a first closed position and a first open position. The first moveable cover at least partially closes the first opening and forms a first section of the exterior surface in the first closed position. The first moveable cover at least partially opens the first opening in the first open position. The open guide vanes are arranged circumferentially about the nacelle structure in an array. Each of the open guide vanes projects radially outward from the exterior surface to a respective vane tip. The open guide vanes include a first open guide vane. The vane actuation system is configured to adjust a vane parameter of the first open guide vane. The vane actuation system is housed radially beneath the nacelle structure with the first opening providing access to the vane actuation system when the first opening is open.

The following optional features may be applied to any of the above aspects in any combination.

The open guide vanes may include a first open guide vane and a second open guide vane that circumferentially neighbors the first open guide vane. A portion of the first opening may be located circumferentially between and extends axially along the first open guide vane and the second open guide vane.

The first moveable cover may be configured as or otherwise include a panel. The panel may extend axially along the axis between opposing axial ends of the first moveable cover in the first closed position. The panel may extend circumferentially about the axis between opposing circumferential ends of the first moveable cover in the first closed position.

The first moveable cover may include a first panel and a second panel movably coupled to the first panel. The second panel may be axially next to and radially flush with the first panel in the first closed position.

The first panel may be axially forward of the second panel along the axis. The first panel may be pivotally coupled to a stationary structure. The second panel may be pivotally coupled to the first panel at an axial intersection between the first panel and the second panel.

The first panel may be axially aft of the second panel along the axis. The first panel may be pivotally coupled to a stationary structure. The second panel may be pivotally coupled to the first panel at an axial intersection between the first panel and the second panel.

The first moveable cover may include a first panel and a second panel movably coupled to the first panel. The second panel may be circumferentially next to and radially flush with the first panel in the first closed position.

The first panel may be pivotally coupled to a stationary structure. The second panel may be pivotally coupled to the first panel at a circumferential intersection between the first panel and the second panel.

The first moveable cover may be configured as or otherwise include a multi-panel folding door.

The first moveable cover may be configured to pivot between the first closed position and the first open position.

The first moveable cover may be configured to translate over a second section of the exterior surface between the first closed position and the first open position.

The first moveable cover may be operatively coupled to a stationary structure of the aircraft propulsion system during movement between the first closed position and the first open position.

The first moveable cover may be configured to detach from the aircraft propulsion system to facilitate movement between the first closed position and the first open position.

The first moveable cover may completely close the first opening in the first closed position.

The nacelle structure may also include a second moveable cover. The second moveable cover may be configured to move between a second closed position and a second open position. The second moveable cover may partially close the first opening and form a second section of the exterior surface in the second closed position. The second moveable cover may partially open the second opening in the second open position.

The second moveable cover in the second closed position may be axially next to the first moveable cover in the first closed position.

The second moveable cover in the second closed position may be circumferentially next to the first moveable cover in the first closed position.

The second moveable cover may be located circumferentially between and may extend axially along the first open guide vane and the second open guide vane in the second closed position.

The assembly may also include an open propulsor rotor, a turbine engine and a housing structure. The turbine engine may be configured to drive rotation of the open propulsor rotor. The turbine engine may include a compressor section, a combustor section and a turbine section. The housing structure may include an engine case, the nacelle structure and an internal compartment. The engine case may house the compressor section, the combustor section and the turbine section. The nacelle structure may house and provide an aerodynamic cover over the engine case. The internal compartment may be formed by and extend radially between the engine case and the nacelle structure. The first opening may lead into the internal compartment.

The present invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of an aircraft propulsion system.
FIG. 2 is a partial schematic illustration of the aircraft propulsion system at a propulsion section.
FIG. 3 is a partial sectional schematic illustration of the aircraft propulsion system at an open guide vane structure with an arrangement of pivoting moveable covers.
FIG. 4 is a partial plan view schematic illustration of the aircraft propulsion system at the open guide vane structure.
FIGS. 5A and 5B are partial sectional schematic illustrations of the aircraft propulsion system at the open guide vane structure with other arrangements of pivoting moveable covers.
FIGS. 6A and 6B are partial sectional schematic illustrations of the aircraft propulsion system at the open guide vane structure with arrangements of translating moveable covers.
FIGS. 7A-C are partial sectional schematic illustrations of the aircraft propulsion system at the open guide vane structure with arrangements of folding moveable covers.
FIGS. 8A and 8B are partial sectional schematic illustrations of the aircraft propulsion system at the open guide vane structure with arrangements of moveable cover sets.
FIG. 9 is a partial plan view schematic illustration of the aircraft propulsion system at the open guide vane structure with another arrangement of moveable covers.

### DETAILED DESCRIPTION

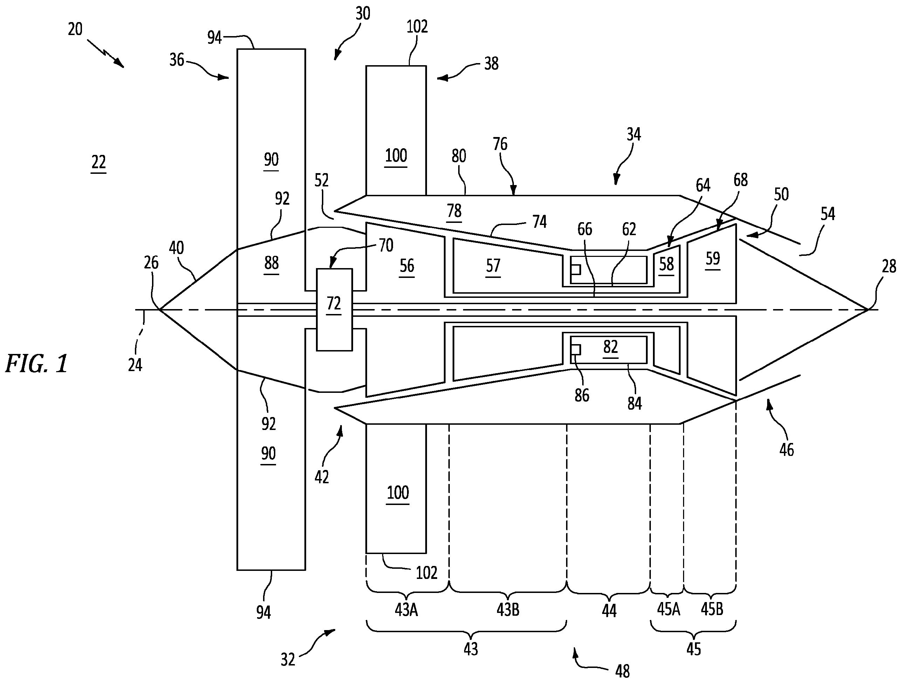

FIG. 1 is a schematic illustration of a propulsion system 20 for an aircraft. The aircraft may be an airplane, a drone (e.g., an unmanned aerial vehicle (UAV)), or any other manned or unmanned aerial vehicle or system. The aircraft propulsion system 20 may be configured as an open rotor propulsion system with a single open propulsor rotor and swirl recovery vane (SRV) architecture. Herein, the term "open" may describe a propulsion system section and/or a propulsion system component which is open to an environment 22 (e.g., an ambient environment) external to the aircraft propulsion system 20 and, more generally, the aircraft.

The aircraft propulsion system 20 extends axially along an axis 24 of the aircraft propulsion system 20 between an upstream, forward end 26 of the aircraft propulsion system 20 and a downstream, aft end 28 of the aircraft propulsion system 20. The propulsion system axis 24 may be a centerline axis of the aircraft propulsion system 20 and/or a centerline axis of one or more members of the aircraft propulsion system 20. The propulsion system axis 24 may also or alternatively be a rotational axis of one or more members of the aircraft propulsion system 20. The aircraft propulsion system 20 of FIG. 1 includes an open rotor propulsion section 30 (e.g., an open rotor propulsion module), a gas turbine engine 32 and a stationary housing structure 34.

The propulsion section 30 includes an open propulsor rotor 36 and an open guide vane structure 38. These propulsion section members 36 and 38 are un-ducted components of the aircraft propulsion system 20 and its propulsion section 30. The propulsion section 30 of FIG. 1 also includes a nose cone 40 disposed at (e.g., on, adjacent or proximate) the propulsion system forward end 26. Briefly, this nose cone 40 may be configured as a spinner which is rotatable with the propulsor rotor 36 about the propulsion system axis 24. Alternatively, the nose cone 40 may be configured as a stationary structure of the propulsion section 30.

The turbine engine 32 is configured to power operation of the propulsion section 30. The turbine engine 32 includes an inlet section 42, a compressor section 43, a combustor section 44, a turbine section 45 and an exhaust section 46. The compressor section 43 of FIG. 1 includes a low pressure compressor (LPC) section 43A and a high pressure compressor (HPC) section 43B. The turbine section 45 of FIG. 1 includes a high pressure turbine (HPT) section 45A and a low pressure turbine (LPT) section 45B. At least (or only) the LPC section 43A, the HPC section 43B, the combustor section 44, the HPT section 45A and the LPT section 45B collectively form a core 48 (e.g., a gas generator) of the turbine engine 32. The aircraft propulsion system 20 and its turbine engine 32 also include an engine flowpath 50; e.g., an annular core flowpath. This engine flowpath 50 extends through the engine core 48 from an airflow inlet 52 into the engine flowpath 50 to a combustion products exhaust 54 from the engine flowpath 50. The flowpath inlet 52 of FIG. 1 is also an airflow inlet into the aircraft propulsion system 20 and its turbine engine 32. The flowpath exhaust 54 of FIG. 1 is also a combustion products exhaust from the aircraft propulsion system 20 and its turbine engine 32.

The LPC section 43A includes a bladed low pressure compressor (LPC) rotor 56. The HPC section 43B includes a bladed high pressure compressor (HPC) rotor 57. The HPT section 45A includes a bladed high pressure turbine (HPT) rotor 58. The LPT section 45B includes a bladed low pressure turbine (LPT) rotor 59. Each of these engine rotors 56-59 includes a rotor base (e.g., a disk or a hub) and a plurality of rotor blades (e.g., airfoils, vanes, etc.). The rotor blades are arranged and may be equispaced circumferentially around the respective rotor base in an array. The rotor blades may also be arranged into one or more stages longitudinally along the engine flowpath 50. Each of the rotor blades is connected to the respective rotor base. Each of the rotor blades projects radially (e.g., spanwise) out from the respective rotor base into the engine flowpath 50 and to a distal tip of the respective rotor blade.

The HPC rotor 57 is coupled to and rotatable with the HPT rotor 58. The HPC rotor 57 of FIG. 1, for example, is connected to the HPT rotor 58 by a high speed shaft 62. At least (or only) the HPC rotor 57, the HPT rotor 58 and the high speed shaft 62 collectively form a high speed rotating structure 64; e.g., a high speed spool of the turbine engine 32 and its engine core 48. This high speed rotating structure 64 of FIG. 1 and its members 57, 58 and 62 are rotatable about the propulsion system axis 24. However, in other embodiments, the high speed rotating structure 64 may alternatively be rotatable about another rotational axis which is (e.g., laterally and/or angularly) offset from the rotational axis of the propulsor rotor 36.

The LPC rotor 56 is coupled to and rotatable with the LPT rotor 59. The LPC rotor 56 of FIG. 1, for example, is connected to the LPT rotor 59 by a low speed shaft 66. At least (or only) the LPC rotor 56, the LPT rotor 59 and the low speed shaft 66 collectively form a low speed rotating structure 68; e.g., a low speed spool of the turbine engine 32 and its engine core 48. This low speed rotating structure 68 of FIG. 1 and its members 56, 59 and 66 are rotatable about the propulsion system axis 24. However, in other embodiments, the low speed rotating structure 68 may alternatively be rotatable about another rotational axis which is (e.g., laterally and/or angularly) offset from the rotational axis of the propulsor rotor 36.

The low speed rotating structure 68 is coupled to the propulsor rotor 36 through a drivetrain 70. This drivetrain 70 may be configured as a geared drivetrain, where a geartrain 72 (e.g., a transmission, a speed change device, an epicyclic geartrain, etc.) is disposed between and operatively couples the propulsor rotor 36 to the low speed rotating structure 68 and its LPT rotor 59. With this arrangement, the propulsor rotor 36 may rotate at a different (e.g., slower) rotational speed than the low speed rotating structure 68 and its LPT rotor 59. Here, the propulsor rotor 36 and the low speed rotating structure 68 may rotate in a common (the same) direction about the propulsion system axis 24 or in opposite directions about the propulsion system axis 24 depending, for example, upon the specific configuration of the geartrain 72. Alternatively, the drivetrain 70 may be configured as a direct-drive drivetrain, where the geartrain 72 is omitted. With such an arrangement, the propulsor rotor 36 rotates at a common (the same) rotational speed as the low speed rotating structure 68 and its LPT rotor 59.

The engine sections 42-46 may be arranged sequentially along the propulsion system axis 24 and are housed within and/or formed by the housing structure 34. This housing structure 34 includes an engine case 74 (e.g., a multi-section core case), a nacelle structure 76 and an internal compartment 78 (e.g., a core compartment). The engine case 74 houses one or more of the engine sections 43A-45B; e.g., the engine core 48. The engine case 74 of FIG. 1, for example, extends axially along (e.g., axially overlaps) and extends circumferentially about (e.g., circumscribes) the engine sections 43A-45B and the engine rotors 56-59. The engine case 74 may also house at least a portion of the drivetrain 70 and its geartrain 72. The nacelle structure 76 houses and provides an aerodynamic cover over the engine case 74. The nacelle structure 76 of FIG. 1, for example, is disposed radially outboard of, extends axially along (e.g., axially overlaps) and extends circumferentially about (e.g., circumscribes) the engine core 48 and its engine case 74. This nacelle structure 76 may at least partially or completely form an exterior surface 80 of the housing structure 34 that borders the external environment 22. The compartment 78 of FIG. 1 is formed by and extends radially between the engine case 74 and the nacelle structure 76. With the housing structure arrangement of FIG. 1, the engine rotors 56-59 are disposed within the housing structure 34 and its engine case 74. By contrast, the propulsor rotor 36 and the guide vane structure 38 are disposed outside of the housing structure 34 and within the external environment 22.

During operation of the aircraft propulsion system 20 of FIG. 1, ambient air within the external environment 22 is propelled by the rotating propulsor rotor 36 in the downstream, aft direction towards the propulsion system aft end 28. A major portion (e.g., more than 50%) of this air bypasses the turbine engine 32 to provide forward thrust while a minor portion (e.g., less than 50%) of the air flows into the aircraft propulsion system 20 and its turbine engine 32. For example, an outer stream of the air propelled by the rotating propulsor rotor 36 flows axially across the guide vane structure 38 and outside of the nacelle structure 76 and its exterior surface 80 and, more generally, outside of the housing structure 34. The guide vane structure 38 conditions (e.g., straightens out, de-swirls, etc.) the outer stream of air within the external environment 22 to enhance the forward thrust. By contrast, an inner stream of the air propelled by the rotating propulsor rotor 36 may bypass the guide vane structure 38 and enter the turbine engine 32 and its engine flowpath 50 through the flowpath inlet 52. The air entering the engine flowpath 50 through the flowpath inlet 52 may be referred to as "core air".

The core air is compressed by the LPC rotor 56 and the HPC rotor 57 and directed into a combustion chamber 82 (e.g., an annular combustion chamber) of a combustor 84 (e.g., an annular combustor) in the combustor section 44. Fuel is injected into the combustion chamber 82 by one or more fuel injectors 86 and mixed with the compressed core air to provide a fuel-air mixture. This fuel-air mixture is ignited and combustion products thereof flow through and sequentially drive rotation of the HPT rotor 58 and the LPT rotor 59. The rotation of the HPT rotor 58 and the LPT rotor 59 respectively drive rotation of the HPC rotor 57 and the LPC rotor 56 and, thus, compression of the core air. The rotation of the LPT rotor 59 also drives the rotation of the propulsor rotor 36 through the drivetrain 70 and its geartrain 72. The turbine engine 32 and its low speed rotating structure 68 thereby power operation of (e.g., drive rotation of) the propulsor rotor 36 during aircraft propulsion system operation.

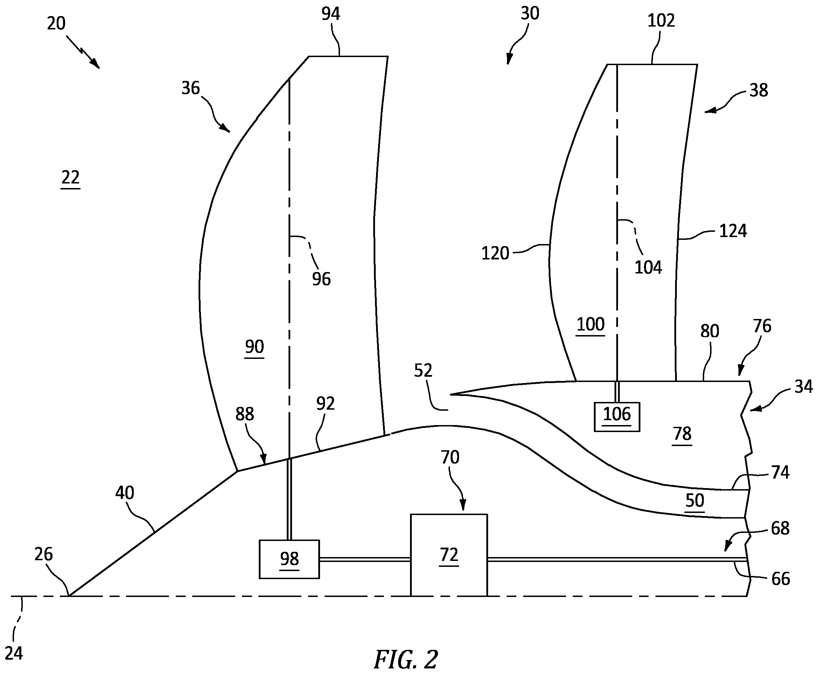

Referring to FIG. 2, the propulsor rotor 36 includes a rotor base 88 (e.g., a disk or a hub) and a plurality of open propulsor blades 90 (e.g., airfoils). The propulsor blades 90 are arranged and may be equispaced circumferentially about the rotor base 88 and the propulsion system axis 24 in an array; e.g., a circular array. This array of the propulsor blades 90 may be unshrouded or alternatively shrouded by a tubular propulsor rotor shroud dedicated to the propulsor rotor 36 for example. The propulsor blade array and, more generally, the propulsor rotor 36 may include a total number of nine (9) or more (e.g., twelve (12) or more) of the propulsor blades 90. Each of the propulsor blades 90 is connected to (e.g., formed integral with or otherwise attached to) the rotor base 88. Each of the propulsor blades 90 projects spanwise along a span line of the respective propulsor blade 90 (e.g., radially relative to the propulsion system axis 24) out from an exterior surface 92 of the rotor base 88, into the external environment 22, to a distal tip 94 of the respective propulsor blade 90. Here, the exterior surface 92 radially borders the external environment 22 and forms a platform surface of the propulsor rotor 36. Each propulsor blade 90 is thereby configured as an un-ducted propulsor blade which is exposed to (e.g., disposed in) the surrounding external environment 22.

Each propulsor blade 90 may be configured to pivot about a pivot axis 96 of the respective propulsor blade 90. This blade pivot axis 96 extends radially relative to the propulsion system axis 24. Each propulsor blade 90 of FIG. 2 is operatively coupled with a blade actuation system 98. This blade actuation system 98 is configured to pivot each propulsor blade 90 about its blade pivot axis 96. By pivoting each propulsor blade 90 about its blade pivot axis 96, a pitch of the respective propulsor blade 90 may be changed. However, it is contemplated some or all of the propulsor blades 90 may be alternatively moved to change the propulsor blade pitch and/or another propulsor blade parameter such as blade camber. Moreover, it is contemplated some or all of the propulsor blades 90 may alternatively be fixed position propulsor blades in other embodiments.

The guide vane structure 38 of FIG. 2 includes a plurality of open exit guide vanes 100 (e.g., airfoils) that are arranged and may be equispaced circumferentially about the propulsion system axis 24 in an array; e.g., a circular array. This array of the guide vanes 100 may be unshrouded or alternatively shrouded by a tubular guide vane shroud dedicated to the guide vane structure 38 for example. The guide vane structure 38 and its guide vanes 100 are arranged axially next to (e.g., adjacent) the propulsor rotor 36 and its propulsor blades 90. The guide vane structure 38 and its guide vanes 100 of FIG. 2, for example, are arranged downstream of the propulsor rotor 36 and its propulsor blades 90, without (e.g., any) other elements axially therebetween to obstruct, turn and/or otherwise influence the air propelled by the propulsor rotor 36 to the guide vane structure 38 for example. Each of the guide vanes 100 of FIG. 2 is coupled to and supported by the housing structure 34. The guide vanes 100, for example, may be coupled to and supported by a support frame between the nacelle structure 76 and the engine case 74. Each of the guide vanes 100 projects spanwise along a span line of the respective guide vane 100 (e.g., radially relative to the propulsion system axis 24) out from the nacelle structure 76 and its exterior surface 80, into the external environment 22, to a distal tip 102 of the respective guide vane 100. Along the guide vanes 100, the nacelle structure 76 and its exterior surface 80 form a platform surface of the guide vane structure 38. Each guide vane 100 is thereby configured as an un-ducted guide vane which is exposed to (e.g., disposed in) the surrounding external environment 22.

Each guide vane 100 may be configured to pivot about a respective vane pivot axis 104. This vane pivot axis 104 extends radially relative to the propulsion system axis 24. Each guide vane 100 of FIG. 2 is operatively coupled with a vane actuation system 106. This vane actuation system 106 may be discrete from or integrated as part of the blade actuation system 98. The vane actuation system 106 is configured to pivot each guide vane 100 about its respective vane pivot axis 104. By pivoting each guide vane 100 about its vane pivot axis 104, a pitch of the respective guide vane 100 may be changed. However, it is contemplated some or all of the guide vanes 100 may be alternatively moved to change the guide vane pitch and/or another guide vane parameter such as vane camber. Moreover, it is contemplated some or all of the guide vanes 100 may alternatively be fixed position guide vanes in other embodiments.

During installation, removal, inspection and/or maintenance of the aircraft propulsion system 20 of FIG. 2, a technician may access the compartment 78 within the housing structure 34 to install, remove, inspect, repair and/or replace one or more members of the aircraft propulsion system 20. One or more of these propulsion system members may be located within the compartment 78. One or more of the propulsion system members may also or alternatively border the compartment 78. One or more of the propulsion system members may also or alternatively be located outside of the compartment 78, but may be accessible through the compartment 78. Examples of the propulsion system members include, but are not limited to, component and/or systems within the inlet section 42 and/or the compressor section 43, engine peripherals and/or accessories within the compartment 78, the vane actuation system 106, electrical lines, fluid lines, and/or the like. Examples of the engine peripherals and/or accessories include, but are not limited to, an electric motor, an electric generator, an electric motor-generator, a pump, an actuator, electronics (e.g., an onboard engine controller, a power bus, a power storage, etc.), and/or the like. One or more of these propulsion system members may be particularly difficult to access (without movable covers as described below) where those propulsion system members and/or access to those propulsion system members is/are beneath the guide vane structure 38 and its array of the guide vanes 100.

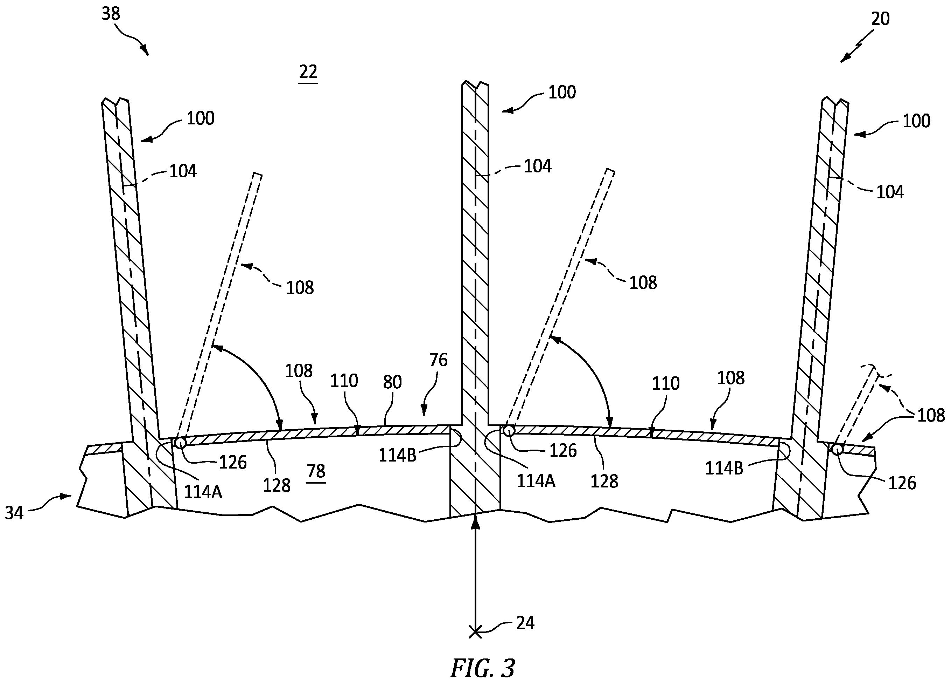

Referring to FIG. 3, to facilitate access to the compartment 78 and, thus, one or more of the propulsion system members, the nacelle structure 76 includes one or more moveable covers 108. Each moveable cover 108 of FIG. 3 is located circumferentially between a respective circumferentially neighboring pair of the guide vanes 100. Each neighboring pair of the guide vanes 100 about the propulsion system axis 24 may also be associated with a respective one of the moveable covers 108. Alternatively, the moveable cover(s) 108 may be associated with any select one or more of the neighboring pairs of the guide vanes 100 about the propulsion system axis 24.

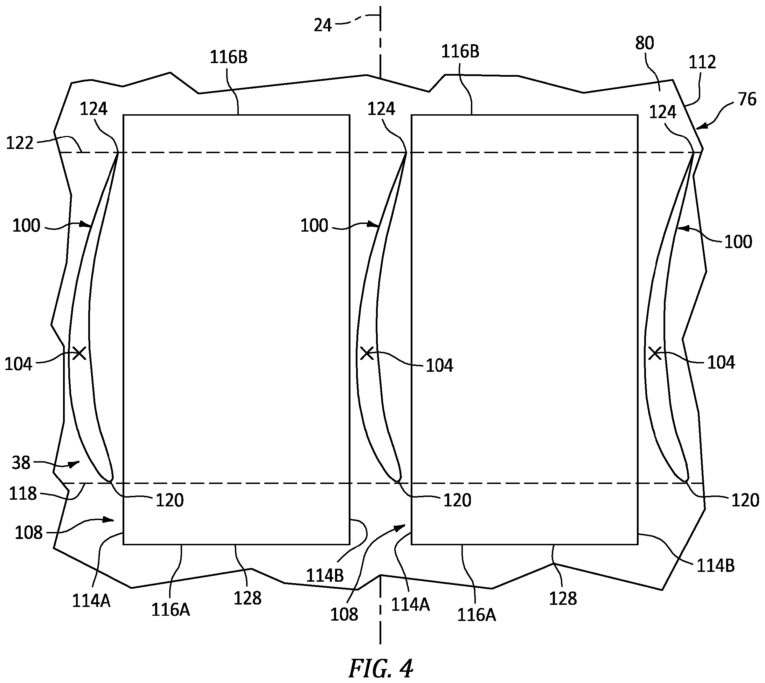

Each moveable cover 108 of FIG. 3 is configured to move between a closed position (e.g., see solid line cover 108 in FIG. 3) and an open position (e.g., see dashed line cover 108 in FIG. 3), for example when the adjacent guide vanes 100 are in a select pitch position (e.g., a feathered pitch position). With each moveable cover 108 in its closed position, that moveable cover 108 is configured to form a respective axially and circumferentially extending section of the nacelle structure 76 and its exterior surface 80. Each moveable cover 108 is configured to form a radial outer peripheral boundary of the compartment 78 radially inboard of the nacelle structure 76. Each moveable cover 108 is also configured to partially or completely cover, plug and/or otherwise close a respective nacelle opening 110 (e.g., a through-hole, a port, etc.) into the compartment 78. Each moveable cover 108 may thereby partially or completely block access to the compartment 78 through the respective nacelle opening 110 when that moveable cover 108 is in its closed position. Briefly, each nacelle opening 110 projects radially through an external wall 112 (see FIG. 4) of the nacelle structure 76 from the external environment 22 (when that nacelle opening 110 is open) to the compartment 78. Each nacelle opening 110 extends axially within the external wall 112 (see FIG. 4). Each nacelle opening 110 also extends circumferentially within the external wall 112 (see FIG. 4). By contrast, with each moveable cover 108 in its open position, that moveable cover 108 is configured to partially or completely uncover, unplug and/or otherwise open the respective nacelle opening 110 into the compartment 78. Each moveable cover 108 may thereby partially or completely open up access to the compartment 78 through the respective nacelle opening 110 when that moveable cover 108 is in its open position.

Referring to FIG. 4, each moveable cover 108 extends circumferentially about the propulsion system axis 24 between opposing circumferential ends 114A and 114B (generally referred to as "114") of the respective moveable cover 108. Each moveable cover 108 extends axially along the propulsion system axis 24 between opposing axial ends 116A and 116B (generally referred to as "116") of the respective moveable cover 108. The first axial end 116A of FIG. 4 is spaced axially upstream and forward of the guide vane structure 38 and its guide vanes 100. The second axial end 116B of FIG. 4 is spaced axially downstream and aft of the guide vane structure 38 and its guide vanes 100. With this arrangement, each moveable cover 108 of FIG. 4 extends axially along (e.g., axially overlaps) the respective neighboring pair of the guide vanes 100. Each moveable cover 108 of FIG. 4 projects axially upstream and forward of the guide vane structure 38 and its guide vanes 100 to its first axial end 116A. Each moveable cover 108 of FIG. 4 also projects axially downstream and aft of the guide vane structure 38 and its guide vanes 100 to its second axial end 116B. The present invention, however, is not limited to such an exemplary arrangement. For example, it is contemplated the first axial end 116A of one or more of the moveable covers 108 may each be axially aligned with (or downstream and aft of) a leading edge plane 118 of the guide vane structure 38 and its guide vanes 100. Briefly, the leading edge plane 118 is a reference plane perpendicular to the propulsion system axis 24 and located at leading edges 120 of the guide vanes 100 (or alternatively, at a leading edge 120 of a fore most situated guide vane 100, where a first set of guide vanes 100 is axially offset from a second set of guide vanes in the array), for example when those guide vanes 100 are in the select pitch position (e.g., the feathered pitch position). It is also or alternatively contemplated the second axial end 116B of one or more of the moveable covers 108 may each be axially aligned with (or upstream and forward of) a trailing edge plane 122 of the guide vane structure 38 and its guide vanes 100. Briefly, the trailing edge plane 122 is a reference plane perpendicular to the propulsion system axis 24 and located at trailing edges 124 of the guide vanes 100 (or alternatively, at a trailing edge 124 of an aft most situated guide vane 100), for example when those guide vanes 100 are in the select pitch position (e.g., the feathered pitch position).

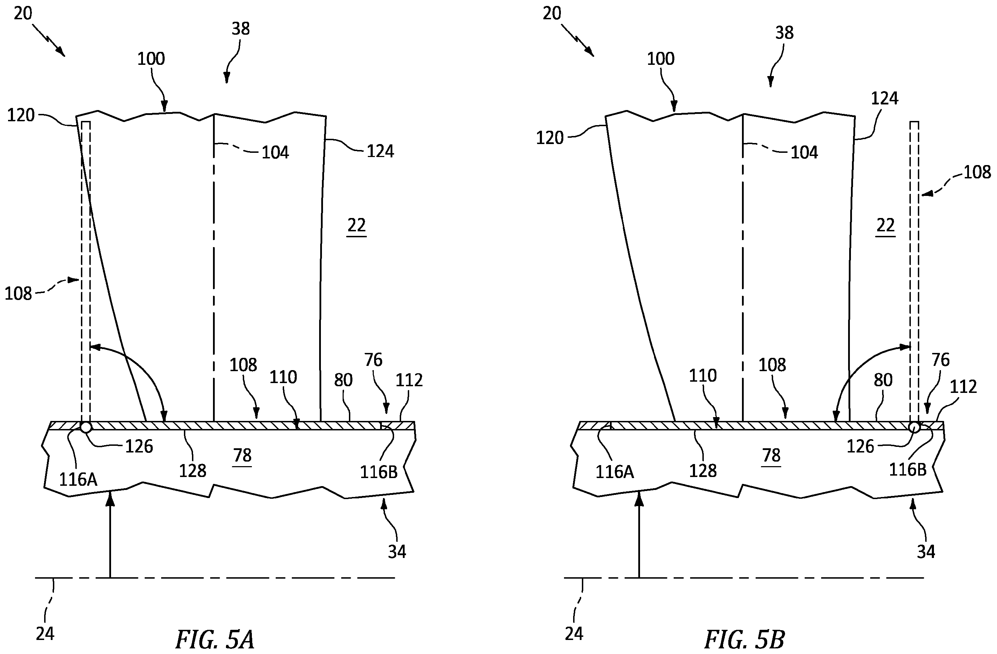

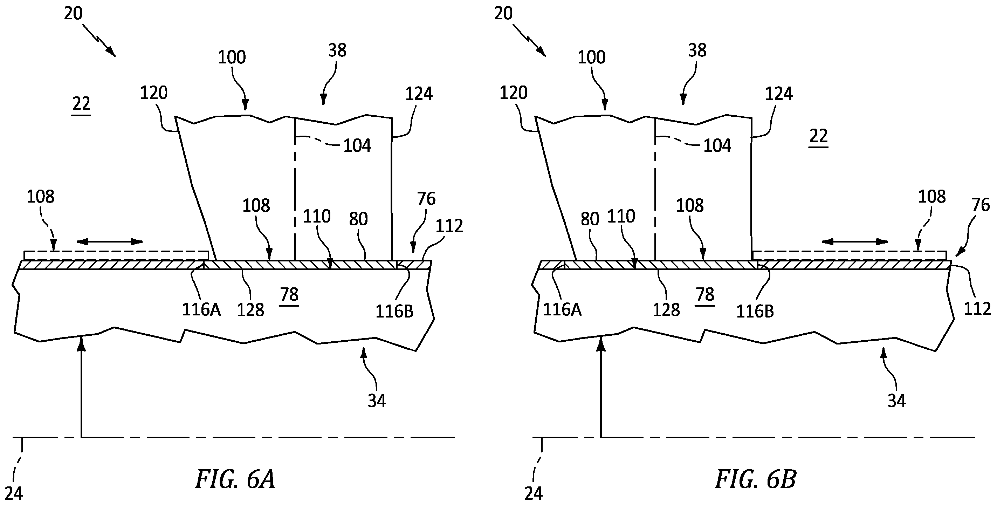

Referring to FIG. 3, to facilitate the movement of each moveable cover 108 between its closed position and its open position, that moveable cover 108 may be operatively coupled to a stationary structure of the aircraft propulsion system 20. This stationary structure may be configured as part of the nacelle structure 76 (e.g., the external wall 112 of FIG. 4), the engine case 74 (see FIGS. 1 and 2), or a support structure (e.g., a frame) radially between the nacelle structure 76 and the engine case 74 (see FIGS. 1 and 2). Each moveable cover 108 of FIG. 3, for example, is configured as a pivoting nacelle door. Each moveable cover 108 of FIG. 3, in particular, is pivotably coupled to the stationary structure at a respective cover pivot axis 126. This cover pivot axis 126 may extend axially along one of the circumferential ends 114 of the respective moveable cover 108; e.g., the first circumferential end 114A in FIG. 3. Alternatively, referring to FIGS. 5A and 5B, the cover pivot axis 126 may extend laterally along one of the axial ends 116 of the respective moveable cover 108; e.g., the first axial end 116A in FIG. 5A and the second axial end 116B in FIG. 5B. The present invention, however, is not limited to such exemplary pivoting nacelle door arrangements. For example, referring to FIGS. 6A and 6B, each moveable cover 108 may alternatively be configured as a translating nacelle door. Each moveable cover 108 of FIGS. 6A and 6B, for example, may be coupled to the stationary structure through a track system (not visible in FIGS. 6A and 6B). With this arrangement, each moveable cover 108 may be translated in an axial forward direction (e.g., see FIG. 6A) or an axial aft direction (e.g., see FIG. 6B) from its closed position to its open position. In still another example, any one or more of the moveable covers 108 may alternatively be removably attached to the stationary structure; e.g., the external wall 112 of FIG. 4. With such an arrangement, each moveable cover 108 may be unfastened and detached for movement to, for example, a storage area.

In some embodiments, referring to FIGS. 3-6B, any one, some or all of the moveable covers 108 may each be configured with a single cover panel 128. Each cover panel 128 of FIG. 4 extend circumferentially between and to the circumferential ends 114 of the respective moveable cover 108. Each cover panel 128 of FIG. 4 extends axially between and to the axial ends 116 of the respective moveable cover 108.

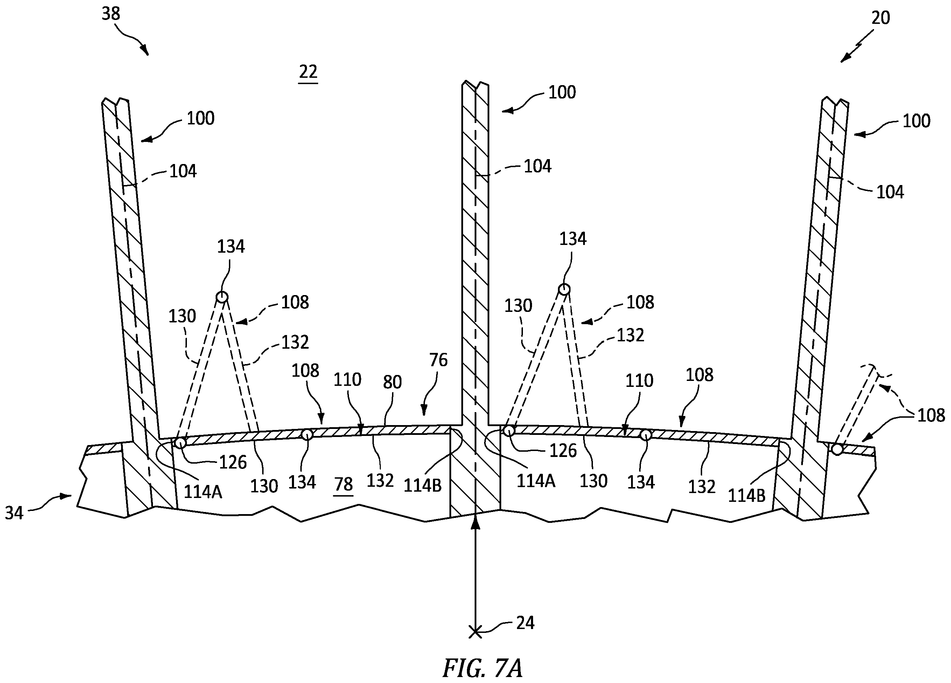

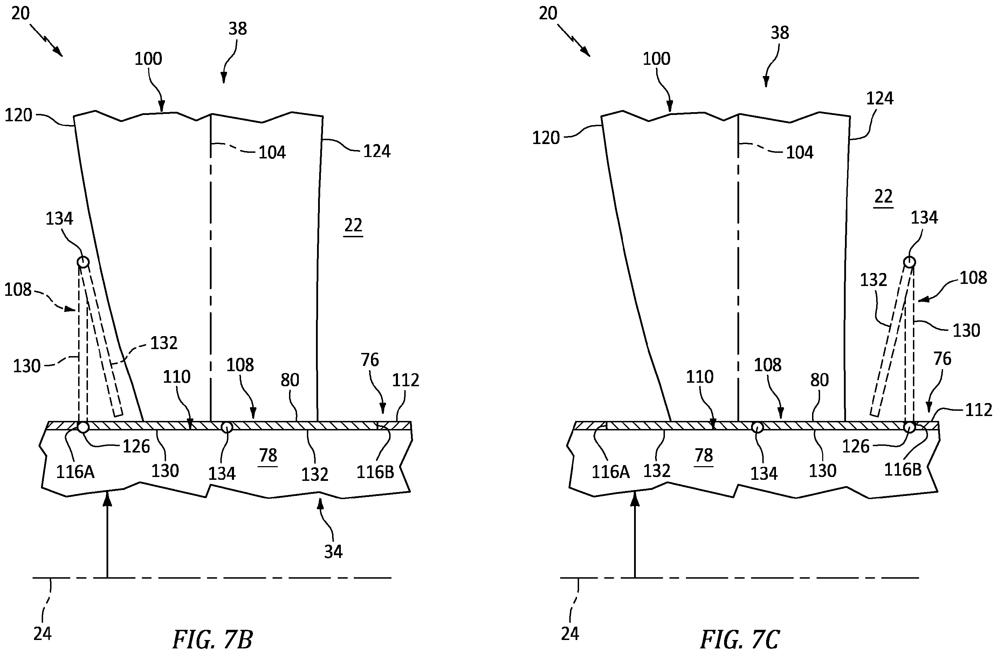

In some embodiments, referring to FIGS. 7A-C, any one, some or all of the moveable covers 108 may each be configured as a multi-panel folding door; e.g., a bi-folding door. Each moveable cover 108 of FIGS. 7A-C, for example, includes a first cover panel 130 and a second cover panel 132. The first cover panel 130 may be pivotally coupled to the stationary structure at the respective cover pivot axis 126. The second cover panel 132 may be pivotally coupled to the first cover panel 130 about an inter-panel pivot axis 134 at an inter-panel intersection between the cover panels 130 and 132. In some embodiments, referring to FIG. 7A, the first cover panel 130 may be disposed circumferentially next to the second cover panel 132 at least when that moveable cover 108 is in its closed position. In other embodiments, referring to FIGS. 7B and 7C, the first cover panel 130 may be disposed axially next to the second cover panel 132 at least when that moveable cover 108 is in its closed position. In the embodiments of FIGS. 7A-C, an exterior surface of the first cover panel 130 may be radially flushed with an exterior surface of the second cover panel 132 when the respective moveable cover 108 is in the closed position.

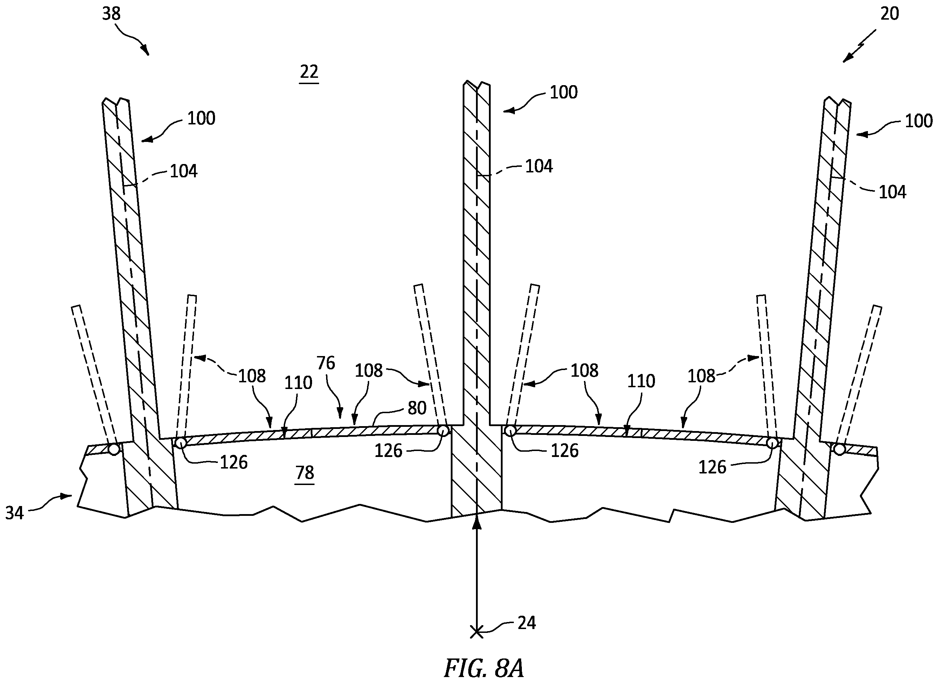

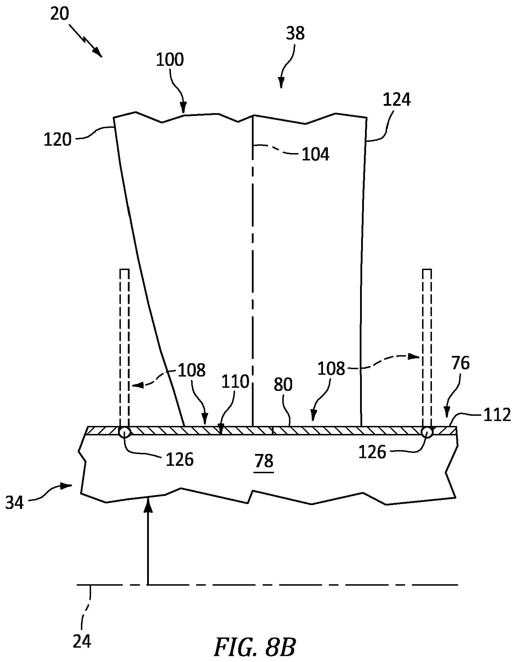

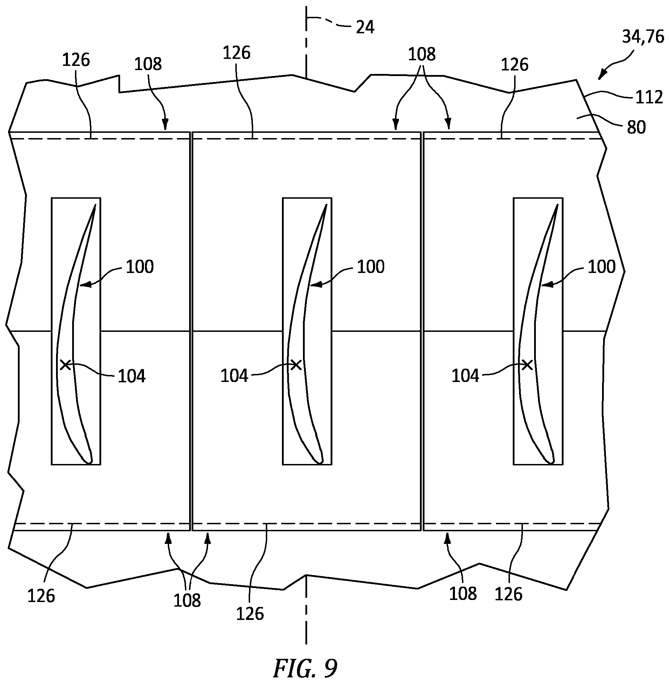

In some embodiments, referring to FIGS. 3-7B, each moveable cover 108 may be configured to completely close and/or completely open the respective nacelle opening 110. More particularly, a single one of the moveable covers 108 may be used to close and open each nacelle opening 110. In other embodiments, referring to FIGS. 8A, 8B and 9, a set of the moveable covers 108 may be arranged to collectively close and open each respective nacelle opening 110 (not visible in FIG. 9). As best seen in FIGS. 8A and 8B, the movable covers may be configured to open (e.g., pivot) away from one another to open the respective nacelle opening 110. However, in other embodiments, it is contemplated the moveable covers 108 may be configured to open (e.g., pivot) towards one another to open the respective nacelle opening 110. In FIG. 8A, the moveable covers 108 are arranged circumferentially next to one another. In FIG. 8B, the moveable covers 108 are arranged axially next to one another. Note, while each moveable cover 108 in FIGS. 8A, 8B and 9 is shown with a single cover panel configuration, it is contemplated one or more of these moveable covers 108 may each have a multi-panel configuration; e.g., a bi-folding door configuration.

In some embodiments, referring to FIG. 4, each moveable cover 108 may be circumferentially aligned with a gap between the respective neighboring pair of the guide vanes 100. In other embodiments, referring to FIG. 9, each moveable cover 108 may be circumferentially aligned with a respective one of the guide vanes 100. With this arrangement, a first side portion of each moveable cover 108 is located circumferentially between a first neighboring pair of the guide vanes 100, while a second side portion of each moveable cover 108 is located circumferentially between a second neighboring pair of the guide vanes 100.

The engine flowpath 50 of FIG. 1 extends longitudinally from the flowpath inlet 52, sequentially through the inlet section 42, the LPC section 43A, the HPC section 43B, the combustor section 44, the HPT section 45A, the LPT section 45B and the exhaust section 46, to the flowpath exhaust 54. The engine flowpath 50 of FIG. 1 is configured such that the core air and the combustion products generally flow in the aft, downstream direction towards the propulsion system aft end 28. The core air and the combustion products thereby flow along with the ambient air propelled by the rotating propulsor rotor 36 in a common axial direction - the downstream, aft direction. The turbine engine 32 of the present invention, however, is not limited to such an exemplary common flow engine arrangement. For example, the engine flowpath 50 may alternatively be configured such that the core air and the combustion products generally flow in a forward, upstream direction towards the propulsion system forward end 26. The core air and the combustion products may thereby flow in an opposite direction as the ambient air propelled by the rotating propulsor rotor 36. Here, the turbine engine 32 may have a reverse flow engine arrangement.

The aircraft propulsion system 20 of FIG. 1 and its propulsion section 30 are described above with a tractor configuration; e.g., where the propulsor rotor 36 is disposed at or otherwise near the propulsion system forward end 26. It is contemplated, however, the propulsion section 30 may alternatively be disposed at or otherwise near the propulsion system aft end 28 to provide a pusher fan configuration. Moreover, while the turbine engine 32 is described above with a particular two rotating structure arrangement, the present invention is not limited thereto. For example, the LPC rotor 56 may be omitted to configure the LPT rotor 59 as a power turbine (PT) rotor for the propulsor rotor 36. In another example, the turbine engine 32 may also include another rotating structure; e.g., an intermediate speed spool for the engine core 48.

While various embodiments of the present invention have been described, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. An assembly for an aircraft propulsion system (20), comprising:
a nacelle structure (76) extending axially along and circumferentially about an axis (24), the nacelle structure (76) including an exterior surface (80), a first opening (110) and a first moveable cover (108), the exterior surface (80) configured to border an environment (22) external to the aircraft propulsion system (20), the first moveable cover (108) configured to move between a first closed position and a first open position, the first moveable cover (108) at least partially closing the first opening (110) and forming a first section of the exterior surface (80) in the first closed position, and the first moveable cover (108) at least partially opening the first opening (110) in the first open position; and
a plurality of open guide vanes (100) arranged circumferentially about the nacelle structure (76) in an array, each of the plurality of open guide vanes (100) configured to project radially outward from the exterior surface (80), into the environment (22) external to the aircraft propulsion system (20), to a respective vane tip (102), and the plurality of open guide vanes (100) comprising a first open guide vane (100) and a second open guide vane (100) that circumferentially neighbors the first open guide vane (100);
a portion of the first moveable cover (108) located circumferentially between and extending axially along the first open guide vane (100) and the second open guide vane (100) in the first closed position.

2. The assembly of claim 1, wherein:
the first moveable cover (108) comprises a panel (128);
the panel (128) extends axially along the axis (24) between opposing axial ends (116A, 116B) of the first moveable cover (108) in the first closed position; and
the panel (128) extends circumferentially about the axis (24) between opposing circumferential ends (114A, 114B) of the first moveable cover (108) in the first closed position.

3. The assembly of claim 1 or 2, wherein the first moveable cover (108) includes a first panel (130) and a second panel (132) movably coupled to the first panel (130), and the second panel (132) is axially next to and radially flush with the first panel (130) in the first closed position.

4. The assembly of claim 3, wherein:
the first panel (130) is axially forward of the second panel (132) along the axis (24), the first panel (130) is pivotally coupled to a stationary structure (112), and the second panel (132) is pivotally coupled to the first panel (130) at an axial intersection (134) between the first panel (130) and the second panel (132); or
the first panel (130) is axially aft of the second panel (132) along the axis (24), the first panel (130) is pivotally coupled to a stationary structure (112), and the second panel (132) is pivotally coupled to the first panel (130) at an axial intersection (134) between the first panel (130) and the second panel (132).

5. The assembly of claim 1 or 2, wherein the first moveable cover (108) includes a first panel (130) and a second panel (132) movably coupled to the first panel (130), and the second panel (132) is circumferentially next to and radially flush with the first panel (130) in the first closed position.

6. The assembly of claim 5, wherein:
the first panel (130) is pivotally coupled to a stationary structure (112); and
the second panel (132) is pivotally coupled to the first panel (130) at a circumferential intersection (134) between the first panel (130) and the second panel (132).

7. The assembly of any preceding claim, wherein:
the first moveable cover (108) is configured to pivot between the first closed position and the first open position; and/or
the first moveable cover (108) comprises a multi-panel folding door.

8. The assembly of claim 1 or 2, wherein the first moveable cover (108) is configured to translate over a second section of the exterior surface (80) between the first closed position and the first open position.

9. The assembly of any preceding claim, wherein the first moveable cover (108) is operatively coupled to a stationary structure (112) of the aircraft propulsion system (20) during movement between the first closed position and the first open position.

10. The assembly of any preceding claim, wherein the first moveable cover (108) is configured to detach from the aircraft propulsion system (20) to facilitate movement between the first closed position and the first open position.

11. The assembly of any preceding claim, wherein the first moveable cover (108) completely closes the first opening in the first closed position.

12. The assembly of any of claims 1 to 10, wherein:
the nacelle structure (76) further comprises a second moveable cover (108);
the second moveable cover (108) is configured to move between a second closed position and a second open position;
the second moveable cover (108) partially closes the first opening (110) and forms a second section of the exterior surface (80) in the second closed position; and
the second moveable cover (108) partially opens the first opening (110) in the second open position.

13. The assembly of claim 12, wherein:
the second moveable cover (108) in the second closed position is axially next to the first moveable cover (108) in the first closed position; or
the second moveable cover (108) in the second closed position is circumferentially next to the first moveable cover (108) in the first closed position.

14. The assembly of claim 12 or 13, wherein the second moveable cover (108) is located circumferentially between and extends axially along the first open guide vane (100) and the second open guide vane (100) in the second closed position.

15. The assembly of any preceding claim, further comprising:
an open propulsor rotor (36);
a turbine engine (32) configured to drive rotation of the open propulsor rotor (36), the turbine engine (32) including a compressor section (43), a combustor section (44) and a turbine section (45); and
a housing structure (34) including an engine case (74), the nacelle structure (76) and an internal compartment (78), the engine case (74) housing the compressor section (43), the combustor section (44) and the turbine section (45), the nacelle structure (76) housing and providing an aerodynamic cover over the engine case (74), the internal compartment (78) formed by and extending radially between the engine case (74) and the nacelle structure (76), and the first opening (110) leading into the internal compartment (78).
